# EUROPEAN PATENT SPECIFICATION

(11) **EP 0 747 982 B1**
(45) Date of publication and mention of the grant of the patent: **26.01.2000**
(21) Application number: 96304263.5
(22) Date of filing: 07.06.1996
(51) Int. Cl.: H01M 4/50, H01M 4/62

(54) **Cathodes for electrochemical cells having additives**
Additvthaltige Kathoden für elektrochemische Zellen
Cathodes contenant des additifs pour cellules électrochimiques

(30) Priority: 07.06.1995 US 485424
(43) Date of publication of application: 11.12.1996
(73) Proprietor: EVEREADY BATTERY COMPANY, INC., St. Louis Missouri 63164 (US)
(72) Inventor: Swierbut, Wendi M., Westlake, Ohio 44145 (US); Nardi, John C., Brunswick, Ohio 44212 (US)
(74) Representative: Tubby, David George

(56) References cited:
- WO-A-85/01615
- WO-A-92/17910
- WO-A-96/25772
- WO-A-97/08770
- DE-A- 2 937 285
- FR-A- 1 270 318
- US-A- 3 257 242
- US-A- 4 465 747
- US-A- 4 478 921
- US-A- 4 549 943
- US-A- 5 077 150
- US-A- 5 424 145
- US-A- 5 516 604
- DATABASE WPI Section Ch, Week 8128 Derwent Publications Ltd., London, GB; Class A85, AN 81-50867D XP002012847 & JP-A-56 061 771 (NIPPON ELECTRIC KK) , 27 May 1981
- DATABASE WPI Section Ch, Week 8147 Derwent Publications Ltd., London, GB; Class A85, AN 81-86344D XP002013459 & JP-A-56 130 082 (TOSHIBA DENCHI KK) , 12 October 1981 & PATENT ABSTRACTS OF JAPAN vol. 6, no. 9 (E-090), 20 January 1982
- CHEMICAL ABSTRACTS, vol. 106, no. 22, 1 June 1987 Columbus, Ohio, US; abstract no. 179816, YAMAMOTO, TAKAKAZU: "Secondary zinc-manganese oxide battery" XP002013457 & JP-A-61 294 768 (JAPAN)
- CHEMICAL ABSTRACTS, vol. 107, no. 26, 28 December 1987 Columbus, Ohio, US; abstract no. 239778, YAMAMURA, KAZUAKI ET AL: "Manufacture of manganese dioxide for batteries" XP002013458 & JP-A-62 187 118 (CHUO DENKI KOGYO CO., LTD., JAPAN)
- EXTENDED ABSTRACTS, vol. 93/2, 1 January 1993, page 729 XP000422396 XIA XI: "A STUDY ON THE RECHARGEABILITY OF MODIFIED MNO2"

## Description

The present invention generally relates to electrochemical cells including cathode additives and more particularly to primary alkaline electrochemical cells having cathodes formed of manganese dioxide, one or more oxide additives, and other cathode components.

Typical alkaline cells include: a steel cylindrical can having a cathode comprising manganese dioxide as the active material, generally formed on the interior surface of the steel can; an anode comprising zinc, generally located in the centre of the cell; a separator film located between the anode and the cathode; and an alkaline electrolyte simultaneously contacting the anode, cathode, and separator. A conductive anode current collector is inserted into the anode active material and a seal assembly closes the open end of the steel can.

A primary goal in the design of alkaline batteries is to increase the service performance of the cell. The service performance is the length of time taken for the cell to discharge under a given load to a specific voltage at which the cell is no longer useful for its intended purpose. One approach which has been taken to increase service performance was to increase the interior volume of the cell in order to increase the amount of active materials within the cell. However, the commercial external size of the cell is fixed, thereby limiting the ability to increase the amounts of active materials within the cell. In order to accommodate more active materials within the cell while maintaining the external size of the cell, the steel label of the conventional alkaline cell has been replaced with one made of thinner metalized plastic film. Thus, the steel can may be enlarged to provide a greater internal volume. By switching to a thinner plastic film label, the service performance of a typical alkaline cell was significantly increased.

Another approach taken to increase the service performance of a cell is to provide for better utilization of the materials of the electrodes. This approach is taken in US-A-5,342,712, which discloses utilizing an anatase titanium dioxide as an additive to a cathode having manganese dioxide as the active material.

Despite past increases in service performance, the need to find new ways to increase service performance remains the primary goal of cell designers.

We have now discovered that the service performance of alkaline cells may be improved by the addition of one or more specific oxide additives to the active cathode material. Thus, the present invention provides an aqueous alkaline electrochemical cell having an anode, a cathode, and an electrolyte, said cathode comprising a manganese dioxide active material and an additive, characterised in that the additive comprises one or more of Fe₂O₃-TiO₂, fumed TiO₂, BaTiO₃, K₂TiO₃, Nb₂O₅, Al₂O₃, CoTiO₃, SrTiO₃, and SnO.

The cathode is particularly adapted for use in an aqueous alkaline electrochemical cell of the present invention having a zinc anode.

In a preferred embodiment, the additive constitutes from 0.1 to 10 weight percent of said cathode, preferably from 1 to 5 weight percent of said cathode and more preferably, but except when the additive comprises BaTiO₃ or Al₂O₃, from 1 to 2 weight percent of said cathode.

The invention is further illustrated by reference to the accompanying drawings, in which:
Figure 1 is a cutaway perspective view of an example of an electrochemical cell constructed in accordance with the present invention;
Figure 2 is a comparative graph of the service performance of a standard alkaline cell having a cathode with no additives and electrochemical cells having cathodes with additives in accordance with the present invention;
Figure 3 is a comparative graph of the service performance of a standard alkaline cell having a cathode with no additives and electrochemical cells having cathodes with additives in accordance with the present invention;
Figure 4 is a comparative graph of the service performance of a standard alkaline cell having a cathode with no additives and an electrochemical cell having a cathode with an additive in accordance with the present invention.

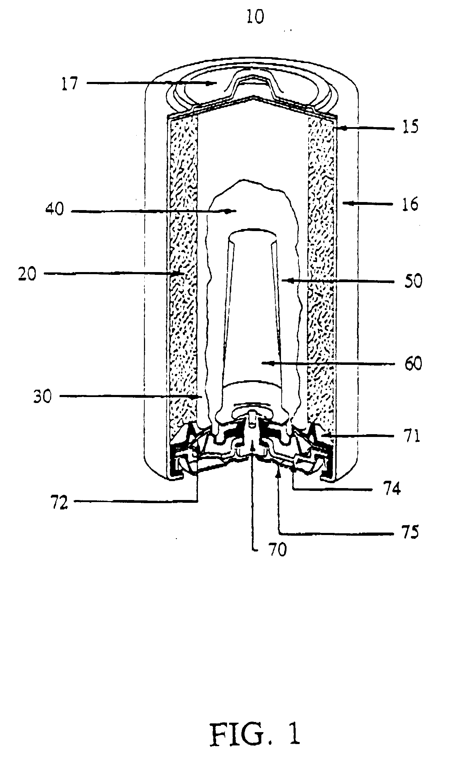

Figure 1 shows a cutaway view of a typical cylindrical alkaline battery 10. Alkaline battery 10 includes a steel can 15 having a cylindrical shape and one open end. A metalized, plastic film label 16 is formed about the exterior surface of steel can 15 except for the ends of steel can 15. At the closed end of steel can 15 is a positive cover 17 preferably formed of plated steel. Film label 16 is formed over the peripheral edge of positive cover 17.

A cathode 20 preferably formed of a mixture of manganese dioxide, graphite, 45% potassium hydroxide solution, deionized water, a TEFLON™ solution, and an additive, is formed about the interior side surface of steel can 15. A separator 30, which is preferably formed of a non-woven fabric that prevents migration of any solid particles in the battery, is disposed about the interior surface of cathode 20. An electrolyte 40 preferably formed of potassium hydroxide is disposed in the interior of separator 30. An anode 50, preferably formed of zinc powder, a gelling agent and other additives, is disposed within electrolyte 40 in contact with a current collector 60, which may be formed, for example, of brass.

Current collector 60 contacts a brass rivet 70 formed at the open end of steel can 15. A nylon seal 71 is formed at the open end of steel can 15 to prevent leakage of the active ingredients contained in steel can 15. Nylon seal 71 contacts a metal washer 72 and an inner cell cover 74, which is preferably formed of steel. A negative cover 75, which is preferably formed of plated steel, is disposed in contact with inner cell cover 74 and brass rivet 70, which contacts current collector 60 through a hole formed in nylon seal 71. Negative cover 75 is electrically insulated from steel can 15 by nylon seal 71.

The cathode of the present invention for a D-size cell is preferably composed of approximately from 71.76 to 81.66 weight percent MnO₂, about 8.52 weight percent graphite, about 7.87 weight percent of an alkaline solution, such as a 45% KOH solution, about 0.36 weight percent deionized water, about 1.49 weight percent binder material, such as a TEFLON™ solution, and approximately from 0.1 to 10 weight percent of an additive. More preferably, the weight percent of MnO₂ is between about 76.76 and 80.76 and the weight percent of the additive is between 1 and 5, such that the combined weight percent of MnO₂ and the additive is a constant of preferably approximately 81.76. The amount of alkaline solution used in the cathode varies according to cell size as does the amount of the binder material. The additive includes one or more of SnO, BaTiO₃, K₂TiO₃, Al₂O₃, Fe₂O₃-TiO₂, fumed TiO₂ [which is preferably TiO₂ (P-25)], SrTiO₃, CoTiO₃, and Nb₂O₅.

TiO₂ (P-25) is a fumed titanium dioxide available from Degussa Corporation. Unlike most forms of titanium dioxide, which are produced using a precipitation technique, TiO₂ (P-25) is produced by high temperature (> 1200°C) flame hydrolysis of TiCl₄ in the presence of O₂ and H₂. From the burner, a coagulation of primary particles takes place during cooling which results in the final particle size and distribution. A series of cyclones separates the solid material from reaction gases. The product is then subjected to steam to remove HCl which is a by-product from the reaction. TiO₂ (P-25) is non-porous and has a particle shape that is cubic in nature with rounded edges. Crystallographic study of TiO₂ (P-25) shows that multiphases of amorphous, anatase and rutile forms exist. The anatase-to-rutile ratio is between 70:30 and 80:20.

Thus, a preferred form of fumed TiO₂ is a mixture comprising a combination of the anatase and rutile forms of TiO₂ in which the anatase-to-rutile ratio is preferably from 70:30 to 80:20.

The cathode can be made, for example, by the following procedure: weighing out the needed materials and mixing the MnO₂, the additive, and the graphite and blending to obtain a homogeneous mixture. Then, the deionized water, the TEFLON™ solution and the KOH solution are mixed with the dry cathode components to form a homogeneous cathode mix. The cathode mixture is then placed in steel can 15 and moulded into an annular, cylindrical shape.

As stated above, it has been discovered that the addition of small amounts of the above listed additives significantly increases the service performance of alkaline electrochemical cells. The following examples illustrate the advantages obtained from practising the present invention.

### EXAMPLE 1

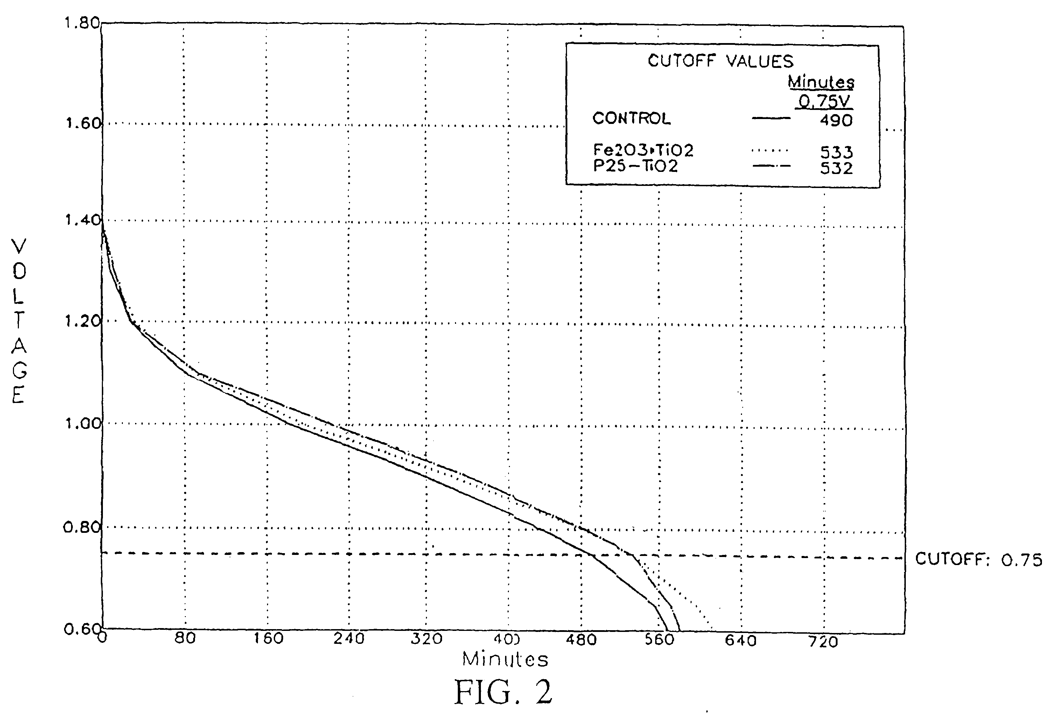

A control alkaline D-size cell was prepared as described above except that no additive was included in the cathode and the weight percentage attributed to the additive was provided by additional MnO₂. Thus, the composition of the cathode in the control cell was approximately 81.76 weight percent MnO₂, about 8.52 weight percent graphite, about 7.87 weight percent of a 45% aqueous solution of potassium hydroxide (KOH), about 0.36 weight percent deionized water, and about 1.49 weight percent of a TEFLON™ binder solution. A first experimental D-size cell having a cathode with 1.6 weight percent Fe₂O₃-TiO₂, (in place of the corresponding amount of MnO₂), and a second experimental D-size cell having the same amount of an additive of a TiO₂ (P-25) additive were also constructed. The three cells were continuously connected to a 1.0 Ohm load and the voltages of the cells were measured over a period of time. Figure 2 shows a graph of the time versus voltage discharge profiles of the three cells. At a cutoff voltage of 0.75 volt, the first experimental cell including the Fe₂O₃-TiO₂ additive, and the second experimental cell-including the TiO₂ (P-25) additive both had a 9% increase in service performance over the control cell.

### EXAMPLE 2

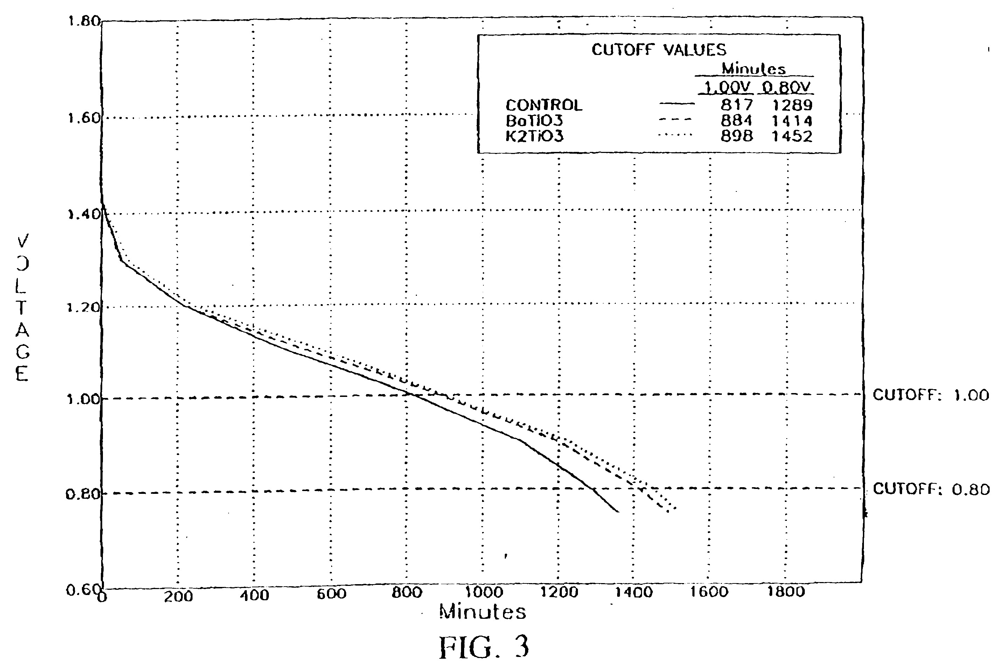

A third experimental D-size cell having a BaTiO₃ additive and a fourth experimental D-size cell having a K₂TiO₃ additive were constructed, along with a control cell having no additive. In both cells containing additives, the amount was 1.6 weight percent. The three cells were connected to a 2.2 Ohm load for one hour per day. Figure 3 shows the resulting time versus voltage discharge profiles for the three cells. For a 1.00 volt cutoff, the fourth experimental cell with the K₂TiO₃ additive showed a 10% increase over the service performance of the control cell and the third experimental cell having the BaTiO₃ additive exhibited an 8% increase in service performance over the control cell. At a 0.80 volt cutoff, the fourth experimental cell having the K₂TiO₃ additive had a 13 % increase in service performance over the control cell, while the third experimental cell had a 10% increase in service performance over the control cell.

### EXAMPLE 3

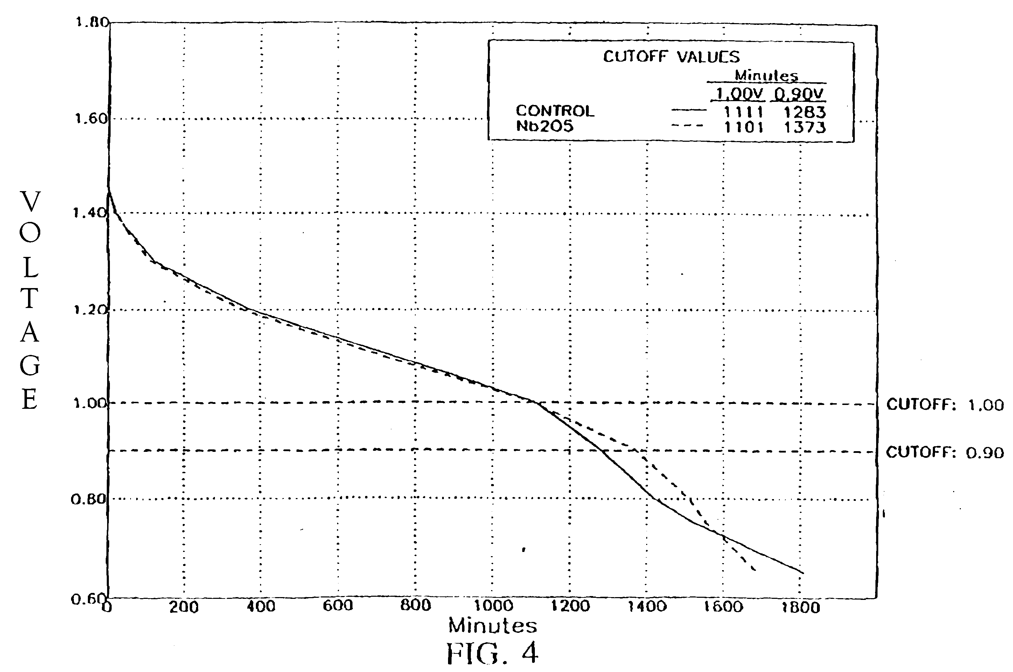

A fifth experimental D-size cell having a Nb₂O₅ additive in an amount of 1.6 weight percent, and a control cell having no additive were constructed and subjected to a 2.2 Ohm light intermittent flashlight (LIF) test, whereby the cells were connected to a 2.2 Ohm load for four minutes per hour for eight consecutive hours per day. Figure 4 shows the resulting time versus voltage discharge profiles for the fifth experimental cell and the control cell. At a 1.00 volt cutoff, the fifth experimental cell showed no improvement in service performance over the control cell. However, at a 0.90 volt cutoff, the fifth experimental cell had a 7 % increase in service performance over the control cell.

### EXAMPLE 4

A control alkaline AA-size cell was prepared as described above using the same weight percentages as used for the control D-size cell except no additive was included in the cathode and the weight percentage attributed to the additive was provided by additional MnO₂. A sixth experimental AA-size cell having a cathode with 1.6 weight percent TiO₂ (P-25) additive was also constructed. The two cells were subjected to an IEC photoflash test by connecting the cells to a 1.8 Ohm load for cycles of fifteen seconds ON and forty-five seconds OFF (i.e., each cycle equaling one minute) and the voltages of the cells were measured over a period of ON/OFF cycles. At a cutoff voltage of 0.9 volt, the sixth experimental cell including the TiO₂ additive had a 15 % increase in service performance over the control cell.

As is apparent from the above examples, significant increases in service performance of an alkaline electrochemical cell may be obtained using additives of Fe₂O₃-TiO₂, TiO₂(P-25), BaTiO₃, K₂TiO₃, and Nb₂O₅. Increases in service performance have also been obtained using additives of SnO, Al₂O₃, SrTiO₃, and COTiO₃.

Although the above examples were restricted to D and AA-size cells, it will be appreciated by those skilled in the an that the increase in service performance may be obtained regardless of the size of the cell. Because some of the above additives perform better than others in continuous tests while others perform better in intermittent tests, it is desirable to combine such additives to enhance the overall service performance of an electrochemical cell for both continuous and intermittent use.

## Claims

1. An aqueous alkaline electrochemical cell having an anode, a cathode, and an electrolyte, said cathode comprising a manganese dioxide active material and an additive, characterised in that the additive comprises one or more of Fe₂O₃-TiO₂, fumed TiO₂, BaTiO₃, K₂TiO₃, Nb₂O₅, Al₂O₃, CoTiO₃, SrTiO₃, and SnO.

2. An electrochemical cell according to claim 1, wherein said anode includes zinc.

3. An electrochemical cell according to claim 1, wherein said additive constitutes from 0.1 to 10 weight percent of said cathode.

4. An electrochemical cell according to claim 3, in which said additive constitutes from 1 to 5 weight percent of said cathode.

5. An electrochemical cell according to any one of claims 1 to 4, in which said additive comprises BaTiO₃.

6. An electrochemical cell according to any one of claims 1 to 4, in which said additive comprises Al₂O₃.

7. An electrochemical cell according to any one of claims 1 to 4, in which said additive comprises fumed TiO₂.

8. An electrochemical cell cell according to any one of claims 1 to 4, in which said additive comprises a combination of anatase and rutile TiO₂.

9. An electrochemical cell according to claim 8, wherein said combination of anatase and rutile TiO₂ includes at least 20 percent rutile TiO₂.

10. An electrochemical cell according to any one of claims 1 to 4, in which said additive comprises Nb₂O₅.

11. An electrochemical cell according to any one of claims 1 to 4, in which said additive comprises SnO.

12. An electrochemical cell according to any one of claims 1 to 4, in which said additive comprises Fe₂O₃-TiO₂.

13. An electrochemical cell according to any one of claims 1 to 4, in which said additive comprises K₂TiO₃.

14. An electrochemical cell according to any one of claims 1 to 4, in which said additive comprises COTiO₃.

15. An electrochemical cell according to any one of claims 1 to 4, in which said additive comprises SrTiO₃.

16. An electrochemical cell according to any one of claims 7 to 15, in which said additive constitutes from 1 to 2 weight percent of said cathode.

## Patentansprüche

1. Wässrige alkalische elektrochemische Zelle, die eine Anode, eine Kathode und einen Elektrolyten besitzt, wobei die Kathode ein aktives Material aus Mangandioxid und einen Zusatzstoff aufweist, dadurch gekennzeichnet, daß der Zusatzstoff eine oder mehrere der Verbindungen Fe₂O₃-TiO₂, pyrogenes TiO₂, BaTiO₃, K₂TiO₃, Nb₂O₅, Al₂O₃, CoTiO₃, SrTiO₃ und SnO aufweist.

2. Elektrochemische Zelle gemäß Anspruch 1, in welcher die Anode Zink aufweist.

3. Elektrochemische Zelle gemäß Anspruch 1, in welcher der Zusatzstoff 0,1 bis 10 Gewichtsprozente der Kathode ausmacht.

4. Elektrochemische Zelle gemäß Anspruch 3, in welcher der Zusatzstoff 1 bis 5 Gewichtsprozente der Kathode ausmacht.

5. Elektrochemische Zelle gemäß irgendeinem der Ansprüche 1 bis 4, in welcher der Zusatzstoff BaTiO₃ aufweist.

6. Elektrochemische Zelle gemäß irgendeinem der Ansprüche 1 bis 4, in welcher der Zusatzstoff Al₂O₃ aufweist.

7. Elektrochemische Zelle gemäß irgendeinem der Ansprüche 1 bis 4, in welcher der Zusatzstoff pyrogenes TiO₂ aufweist.

8. Elektrochemische Zelle gemäß irgendeinem der Ansprüche 1 bis 4, in welcher der Zusatzstoff eine Kombination aus Anatas- und Rutil-TiO₂ aufweist.

9. Elektrochemische Zelle gemäß Anspruch 8, in welcher die Kombination aus Anatas- und Rutil-TiO₂ mindestens 20 Prozent Rutil-TiO₂ aufweist.

10. Elektrochemische Zelle gemäß irgendeinem der Ansprüche 1 bis 4, in welcher der Zusatzstoff Nb₂O₅ aufweist.

11. Elektrochemische Zelle gemäß irgendeinem der Ansprüche 1 bis 4, in welcher der Zusatzstoff SnO aufweist.

12. Elektrochemische Zelle gemäß irgendeinem der Ansprüche 1 bis 4, in welcher der Zusatzstoff Fe₂O₃-TiO₂ aufweist.

13. Elektrochemische Zelle gemäß irgendeinem der Ansprüche 1 bis 4, in welcher der Zusatzstoff K₂TiO₃ aufweist.

14. Elektrochemische Zelle gemäß irgendeinem der Ansprüche 1 bis 4, in welcher der Zusatzstoff CoTiO₃ aufweist.

15. Elektrochemische Zelle gemäß irgendeinem der Ansprüche 1 bis 4, in welcher der Zusatzstoff SrTiO₃ aufweist.

16. Elektrochemische Zelle gemäß irgendeinem der Ansprüche 7 bis 15, in welcher der Zusatzstoff 1 bis 2 Gewichtsprozente der Kathode ausmacht.

## Revendications

1. Pile électrochimique aqueuse alcaline avec une anode, une cathode et un électrolyte, ladite cathode comprenant un matériau actif de dioxyde de manganèse et un additif, caractérisée en ce que l'additif comprend un ou plusieurs des composés parmi Fe₂O₃-TiO₂, TiO₂ sublimé, BaTiO₃, K₂TiO₃, Nb₂O₅, Al₂O₃, CoTiO₃, SrTiO₃ et SnO.

2. Pile électrochimique suivant la revendication 1, dans laquelle ladite anode inclut du zinc.

3. Pile électrochimique suivant la revendication 1, dans laquelle ledit additif constitue de 0,1 à 10 pour-cent en poids de ladite cathode.

4. Pile électrochimique suivant la revendication 3, dans laquelle ledit additif constitue de 1 à 5 pour-cent en poids de ladite cathode.

5. Pile électrochimique suivant l'une quelconque des revendications 1 à 4, dans laquelle ledit additif comprend du BaTiO₃.

6. Pile électrochimique suivant l'une quelconque des revendications 1 à 4, dans laquelle ledit additif comprend du Al₂O₃.

7. Pile électrochimique suivant l'une quelconque des revendications 1 à 4, dans laquelle ledit additif comprend du TiO₂ sublimé.

8. Pile électrochimique suivant l'une quelconque des revendications 1 à 4, dans laquelle ledit additif comprend une combinaison de TiO₂ anatase et rutile.

9. Pile électrochimique suivant la revendication 8, dans laquelle ladite combinaison de TiO₂ anatase et rutile inclut au moins 20 pour-cent de TiO₂ rutile.

10. Pile électrochimique suivant l'une quelconque des revendications 1 à 4, dans laquelle ledit additif comprend du Nb₂O₅.

11. Pile électrochimique suivant l'une quelconque des revendications 1 à 4, dans laquelle ledit additif comprend du SnO.

12. Pile électrochimique suivant l'une quelconque des revendications 1 à 4, dans laquelle ledit additif comprend du Fe₂O₃-TiO₂.

13. Pile électrochimique suivant l'une quelconque des revendications 1 à 4, dans laquelle ledit additif comprend du K₂TiO₃.

14. Pile électrochimique suivant l'une quelconque des revendications 1 à 4, dans laquelle ledit additif comprend du CoTiO₃.

15. Pile électrochimique suivant l'une quelconque des revendications 1 à 4, dans laquelle ledit additif comprend du SrTiO₃.

16. Pile électrochimique suivant l'une quelconque des revendications 7 à 15, dans laquelle ledit additif constitue de 1 à 2 pour-cent en poids de ladite cathode.
